# EUROPÄISCHE PATENTSCHRIFT

(11) **EP 2 799 738 B1**
(45) Veröffentlichungstag und Bekanntmachung des Hinweises auf die Patenterteilung: **05.08.2015**
(21) Anmeldenummer: 13002377.3
(22) Anmeldetag: 03.05.2013
(51) Int. Cl.: F16G 13/20

(54) **Rückensteife Kette**
Rigid-spined chain
Chaîne autoportante

(43) Veröffentlichungstag der Anmeldung: 05.11.2014
(73) Patentinhaber: iwis antriebssysteme GmbH & Co. KG, 81369 München (DE)
(72) Erfinder: Kranz, Christopher, 81375 München (DE); Sahin, Orhan, 81377 München (DE)
(74) Vertreter: Grünecker Patent- und Rechtsanwälte PartG mbB

(56) Entgegenhaltungen:
- DE-A1- 10 206 274
- GB-A- 191 412 985
- JP-A- H0 633 993
- JP-A- H07 172 786
- SU-A1- 492 695
- SU-A1- 626 287
- US-A1- 2009 124 445

## Beschreibung

Die vorliegende Erfindung betrifft eine rückensteife Kette, insbesondere für Tür- und Fensterantriebe, mit einer Vielzahl von einander abwechselnden Kettengliedern, die jeweils über ein Kettengelenk miteinander verbunden sind, und mit einer Versteifungseinrichtung, die die rückensteife Kette in einer ersten Gelenkrichtung versteift, mit einer Vielzahl von einander abwechselnden Kettengliedern, die jeweils über ein Kettengelenk miteinander verbunden sind, wobei ein Federelement mit mindestens einem ersten Federarm vorgesehen ist, sich das Federelement an einem Kettengelenk abstützt, der erste Federarm sich zu einem benachbarten Kettengelenk, mit dem es unter der Vorspannung des Federelements beweglich in Kontakt steht, erstreckt, um eine Biegung der rückensteifen Kette in einer ersten Gelenkrichtung zu hemmen, die Kettenglieder Kettenlaschen aufweisen und die Kettenlaschen benachbarter Kettenglieder über das Kettengelenk miteinander verbunden sind.

Erfindungsgemäss weist die rücksteife Kette weiter eine Versteifungsvorrichtung auf,

die die rücksteife Kette in einer zweiten Gelenkrichtung versteift, und zum Ausbilden der Versteifungseinrichtung Kettenlaschen benachbarter Kettenglieder Abstützabschnitte aufweisen, um die rückensteife Kette in der zweiten Gelenkrichtung zu versteifen, oder Versteifungslaschen vorgesehen sind, die jeweils an mindestens einem Kettengelenk angeordnet sind und stirnseitige Abstützkonturen aufweisen, um die rückensteife Kette in der zweiten Gelenkrichtung zu versteifen.

Die Erfindung bezieht sich weiter auf einen entsprechenden Kettentrieb mit einer solchen rückensteifen Kette.

Eine beidseitig rückensteife Kette ist aus der DE 10 2005 099 154 A1 bekannt. Bei dieser rückensteifen Schubkette zur Kraftübertragung in einem Kettengetriebe werden die Kettenelemente an einem Kettenantriebsrad radial nach Innen verschwenkt. Die Gelenköffnungen der Kettenlaschen sind als Langlöcher ausgebildet und weisen ein Spiel gegenüber den Gelenkbolzen auf, so dass sich die effektive Kettenteilung im Schubstrang verkürzt. An den Enden der Gelenkbolzen sind weiter Laufrollen vorgesehen, die in einer separaten Laufschienenführung die rückensteife Kette im Schubstrang führt. Zusätzlich ermöglichen die als Langlöcher ausgebildeten Gelenköffnungen im Schubstrang eine zuverlässige Anlage der an den Stirnseiten der Kettenlaschen ausgebildeten Versteifungskonturen.

Aus der DE 1 450 699 C1 ist eine weitere rückensteife Kette bekannt. Zwischen den Außenlaschen der Außenkettenglieder und den Innenlaschen der Innenkettenglieder sind Versteifungslaschen vorgesehen, die jeweils an einem Gelenkbolzen angeordnet sind und einen in Kettenlaufrichtung vorstehenden Ansatz aufweisen, dessen Stirnseiten als Abstützflächen ausgebildet sind. Dabei ist eine Stirnseite als Vorsprung und die andere Stirnseite als Aussparung ausgebildet. Die vorspringenden und zurückversetzten Stirnseiten der Versteifungslaschen versteifen die Kette in einer ersten Gelenkrichtung, wohingegen sie in der anderen zweiten Gelenkrichtung weiterhin flexibel bleibt. Daher läuft diese Kette in einem Schubstrang in einer Führung, um zur Kraftübertragung durch diese rückensteife Kette eine Biegung der Kette in der zweiten Gelenkrichtung zu verhindern.

Im Stand der Technik gibt es eine Reihe weiterer sehr unterschiedlicher Konstruktionen rückensteifer Ketten. Die Druckschrift DE 1 180 318 B zeigt beispielsweise einen rückensteifen Kettenantrieb mit einander abwechselnden Innen- und Außenkettengliedern, wobei die Kontur der Kettenlaschen stirnseitig eine Versteifungseinrichtung aufweist und die Kette im Schubstrang mittels Rollen zwischen den Kettenlaschen in einen Führungskanal geführt wird. Aus der DE 2001 002 310 U1 ist eine rückensteife Kette mit identischen gabelförmigen Kettengliedern bekannt, die auf ihrer Rückseite ineinander eingreifende Versteifungskonturen aufweisen. Des Weiteren ist in der EP 1 744 079 A1 eine beidseitig rückensteife Kette gezeigt, bei der die Stirnseiten der Kettenlaschen komplementäre Versteifungskonturen aufweisen, wobei mindestens eine Gelenköffnung als Langloch ausgebildet ist, um im Schubstrang ein sicheres Ineinandergreifen der stirnseitigen Versteifungskonturen mittels einer verkürzten Kettenteilung zu ermöglichen.

Die Druckschrift DE 1 046 422 B1 offenbart eine weitere rückensteife Laschenkette mit einem Verriegelungsmechanismus, der ein Verschwenken der Kettenglieder zueinander blockiert und beim Umlenken mittels einer seitlichen Führung außer Eingriff gebracht wird. Einen weiteren Verriegelungsmechanismus einer rückensteife Kette zeigt die DE 20 2007 002 767 U1, bei dem ein quer zur Kettenlaufrichtung schwenkbares Arretierungselement mittels einer Führungsschiene außer Eingriff gebracht wird.

Die im Stand der Technik bekannten rückensteifen Ketten und Kettenantriebe nutzen sehr unterschiedliche Konzepte und Konstruktionen, um eine Versteifung der Kette im Schubstrang sicher zu stellen, und gleichzeitig das Umlenken der Kette um ein Kettenantriebsrad zu ermöglichen. Viele der bekannten rückensteifen Ketten werden nach der Versteifung hinter dem Kettenantriebsrad in dem Schubstrang durch zusätzliche Maßnahmen gefügt oder die Ketten werden mittels Arretierungsmechanismen in der zweiten oder in beiden Gelenkrichtungen gesichert. Zwar haben sich viele der bisher im Stand der Technik eingesetzten rückensteifen Kettenantriebe zum Teil gut bewährt, jedoch werden dabei zum Teil komplexe Versteifungs- und/oder Verriegelungsmechanismen, sowie aufwändige Konstruktionen eingesetzt, die oftmals zusätzliche Bauräume benötigen

Die JP H07 172786 A befasst sich mit einer Hubkette für einen Gabelstapler, deren Kettenglieder mittels einer Schenkelfeder gegeneinander vorspannbar sind. Auf jedem zweiten Gelenkbolzen ist eine solche Schenkelfeder aufgeschoben, deren beiden Schenkel sich jeweils an den Nachbarbolzen abstützen. Die Kette wird daher immer aus einer gestreckten Stellung in die zusammengelegte Stellung zurückgedrückt.

Aus der US 2009/124445 A1 ist eine Zahnkette bekannt, die Drahtfederelemente zwischen den Kettengliedern aufweist. Diese Drahtfederelemente sollen der Kette eine Biegesteifigkeit verleihen.

Die GB 12985 A zeigt eine Rollenkette. Einige der Kettenglieder weisen nach oben vorstehende Vorsprünge auf, an denen ein Blattfederelement angeordnet ist und der Kette eine gewisse Federelastizität verleiht.

Der vorliegenden Erfindung liegt daher die Aufgabe zugrunde, eine rückensteife Kette sowie einen Kettenantrieb bereitzustellen, die bei einer möglichst einfachen Konstruktion der Kette und des Versteifungsmechanismus eine sichere Versteifung der Kette im Schubstrang ermöglicht.

Diese Aufgabe wird erfindungsgemäß durch eine rückensteife Kette gemäß Anspruch 1 gelöst. Durch das hier in der rückensteifen Kette eingesetzte Federelement wird die Biegung der Kette in der ersten Gelenkrichtung lediglich gehemmt, so dass die Kette im Schubbetrieb ausreichend Kräfte übertragen kann. Die Neigung der erfindungsgemäßen rückensteifen Kette bei quer zur Schubrichtung der Kette wirkenden Knickkräften nachzugeben, wird entsprechend der Federkraft reduziert, so dass die Kette beim Umlenken um ein Kettenrad nachgibt und ohne ein Lösen eines Verriegelungsmechanismus oder eine Längung der Kettenteilung um das Kettenrad herum geführt werden kann. Das Umlenken der rückensteifen Kette um das Kettenrad erfolgt gegen die Federkraft des Federelements. Darüber hinaus reduziert das Federelement durch die elastische Vorspannung zwischen benachbarten Kettengelenken den Einfluss von Schwingungen und dem Polygoneffekt im Schubstrang der rückensteifen Kette, so dass auch relativ kleine Kettenantriebsräder genutzt werden können und ein Betrieb in einem schwingungsbelasteten Bereich möglich ist.

Die erfindungsgemäße rückensteife Kette umfasst eine Versteifungseinrichtung, die die rückensteife Kette in der zweiten Gelenkrichtung versteift. Bei einer Umlenkung der rückensteifen Kette lediglich in der ersten Gelenkrichtung, ermöglicht eine solche Versteifungseinrichtung eine sichere Versteifung in der zweiten Gelenkrichtung und entsprechend auch eine sichere Kraftübertragung im Schubstrang. Dabei kann eine leichte Überstreckung in der zweiten Gelenkrichtung ein unbeabsichtigtes Einknicken der Kette bei der Kraftübertragung im Schubstrang sicher verhindern. Alternativ kann zur Verhinderung des unbeabsichtigten Einknickens der Kette in der zweiten Gelenkrichtung statt einer Versteifungseinrichtung auch ein zweites Federelement mit ein oder zwei Federarmen vorgesehen sein, das eine Biegung der rückensteifen Kette auch in der zweiten Gelenkrichtung hemmt.

Eine erste Lösung sieht vor, dass die Kettenlaschen benachbarter Kettenglieder stirnseitige Abstützabschnitte aufweisen, um die rückensteife Kette in der zweiten Gelenkrichtung zu versteifen. Das Vorsehen stirnseitiger Abstützabschnitte ermöglicht ohne einen Einsatz zusätzlicher Funktionslaschen eine Versteifung der Kette in der zweiten Gelenkrichtung. Dabei werden die Kettenlaschen an der der zweiten Gelenkrichtung zugewandten Rückseite mit Abstützabschnitten versehen, die sich in einer Weise überschneiden, dass ein Einknicken der Kette in der zweiten Gelenkrichtung verhindert wird. Solche Kettenlaschen mit Abstützabschnitten zur Versteifung einer rückensteifen Kette in der zweiten Gelenköffnung sind beispielsweise in der DE 10 2011 107 047 A1 beschrieben.

Eine zweite Lösung sieht vor, dass Versteifungslaschen vorgesehen sind, wobei die Versteifungslaschen jeweils an mindestens einem Kettengelenk angeordnet sind und stirnseitige Abschnittskonturen aufweisen, um die rückensteife Kette in der zweiten Gelenkrichtung zu versteifen. Durch die Ausbildung komplementärer Abstützkonturen an den beiden Stirnseiten der Versteifungslaschen erfolgt die Versteifungsfunktion immer in der Ebene der Versteifungslaschen, so dass die Versteifung der Kette keine seitlichen Kräfte bewirken. Darüber hinaus können für alle übrigen Kettenlaschen der Kettenglieder herkömmliche Laschen eingesetzt werden.

Bevorzugt kann das Federelement einen zweiten Federarm aufweisen, der sich zu einem zweiten benachbarten Kettengelenk erstreckt, mit dem es unter der Vorspannung des Federelements beweglich in Kontakt steht, um die Biegung der rückensteifen Kette in der ersten Gelenkrichtung zu hemmen. Ein zweiter Federarm, der sich ausgehend von dem an einem Kettengelenk abstützenden Federelement zu einem zweiten benachbarten Kettengelenk, das dem ersten benachbarten Kettengelenk gegenüberliegt, erstreckt, ermöglicht eine inhärente Sicherung des Kettengelenks in der ersten Gelenkrichtung durch die beiden Federarme, so dass sie ohne eine Führung am benachbarten Federelement sich frei beweglichen an dem ersten oder zweiten benachbarten Kettengelenk abstützen können.

Eine günstige Ausführungsform sieht vor, dass das Kettengelenk einen Gelenkbolzen aufweist, wobei der Gelenkbolzen sich durch das Federelement erstreckt, um das Federelement mit dem Kettengelenk zu verbinden. Dies ermöglicht unabhängig von einer Fixierung des Federelements am Kettengelenk eine sichere Abstützung des Federelements. Insbesondere bei zwei Federarmen ermöglicht die Anordnung des Federelements um den Gelenkbolzen herum eine in sich bewegliche inhärente Knicksicherung.

Das Federelement kann auf einfache Weise als Torsionsfeder ausgebildet sein. Eine aus einem Federdraht gebogene Torsionsfeder ermöglicht ohne weitere Herstellungsschritte die Ausbildung von ein oder zwei Federarmen sowie einer mittigen Öffnung zur Aufnahme des Gelenkbolzens des Kettengelenks. Eine Torsionsfeder stellt daher eine besonders kostengünstige Ausführungsform eines geeigneten Federelements dar.

Eine zweckmäßige Ausgestaltung sieht vor, dass der erste Federarm und der zweite Federarm des Federelements frei an beiden benachbarten Kettengelenken anliegen und verschiebbar zu den beiden benachbarten Kettengelenken angeordnet sind. Dadurch können die beiden Federarme unfixiert gleitend an den benachbarten Kettengelenken des abgestützten Kettengelenks angeordnet sein, so dass sie sich bei einem Einknicken der rückensteifen Kette bei einem Umlenken um ein zugehöriges Kettenrad an dem benachbarten Kettengelenk verschieben. Eine unfixierte Positionierung der Federarme an den benachbarten Kettengelenken bzw. an den auf diesen Kettengelenken jeweils angeordneten Federelementen, ermöglicht eine einfache Montage ohne exakte Positionierung der Federarme in einer entsprechenden Führung.

Eine besondere Ausgestaltung sieht vor, dass die Kettenglieder abwechselnd mit Versteifungslaschen ausgestattet sind und die Versteifungslaschen jeweils an zwei benachbarten Kettengelenken angeordnet sind. Dadurch können die Versteifungslaschen die herkömmlichen Kettenlaschen der jeweiligen Kettenglieder ersetzen, so dass sowohl der Materialeinsatz als auch die Breite der rückensteifen Kette reduziert werden kann.

Eine weitere Ausführungsform sieht vor, dass die Versteifungslaschen als Zwischenlaschen ausgebildet sind, die Zwischenlaschen jeweils an einem Kettengelenk angeordnet und zwischen den Kettenlaschen angrenzenden Kettengliedern positioniert sind sowie komplementäre stirnseitige Abstützkonturen aufweisen. Als Zwischenlaschen ausgebildete Versteifungslaschen können mit einer relativ geringen Wandstärke hergestellt werden. Die Zwischenlaschen können so die rückensteife Kette in seiner zweiten Gelenkrichtung sicher und im Wesentlichen torsionsfrei versteifen.

Des Weiteren bezieht sich die vorliegende Erfindung auf einen Kettentrieb mit einer der vorstehend beschriebenen Ausführungsformen der erfindungsgemäßen rückensteifen Kette und einem Kettenrad zur Umlenkung der rückensteifen Kette. Im Zusammenspiel mit dem Kettenrad wird die rückensteife Kette in der ersten Gelenkrichtung gegen die Vorspannung des Federelements umgelenkt ohne eine Verriegelung zu lösen. Dabei kann das Kettenrad bei einem Linearantrieb der rückensteifen Kette lediglich die Kette umlenken, gegebenenfalls ohne formschlüssig zwischen die Elemente der Kette einzugreifen, oder bei einem Radialantrieb gleichzeitig auch als Antrieb der Kette dienen. Beim Auslaufen aus dem Kettenrad streckt sich die Kette durch die Vorspannung des Federelements automatisch aus der Biegung in der ersten Gelenkrichtung und ermöglicht so eine Kraftübertragung in Schubrichtung der Kette.

Im Folgenden werden Ausführungsbeispiele der vorliegenden Erfindung anhand von Zeichnungen näher erläutert, es zeigen:
- Fig. 1: eine perspektivische Ansicht einer erfindungsgemäßen rückensteifen Kette,
- Fig. 2: eine Draufsicht auf die erfindungsgemäße rückensteife Kette aus Fig. 1,
- Fig. 3: eine Seitenansicht der rückensteifen Kette aus Fig. 1 in einer Explosionsdarstellung,
- Fig. 4: eine vergrößerte Ansicht eines Ausschnitts der rückensteifen Kette aus Fig. 2,
- Fig. 5: eine Draufsicht auf eine weitere erfindungsgemäße rückensteife Kette,
- Fig. 6: eine Seitenansicht der rückensteifen Kette aus Fig. 5 in einer Explosionsdarstellung, und
- Fig. 7: eine perspektivische Draufsicht auf einen Kettentrieb mit der rückensteifen Kette aus Fig. 5.

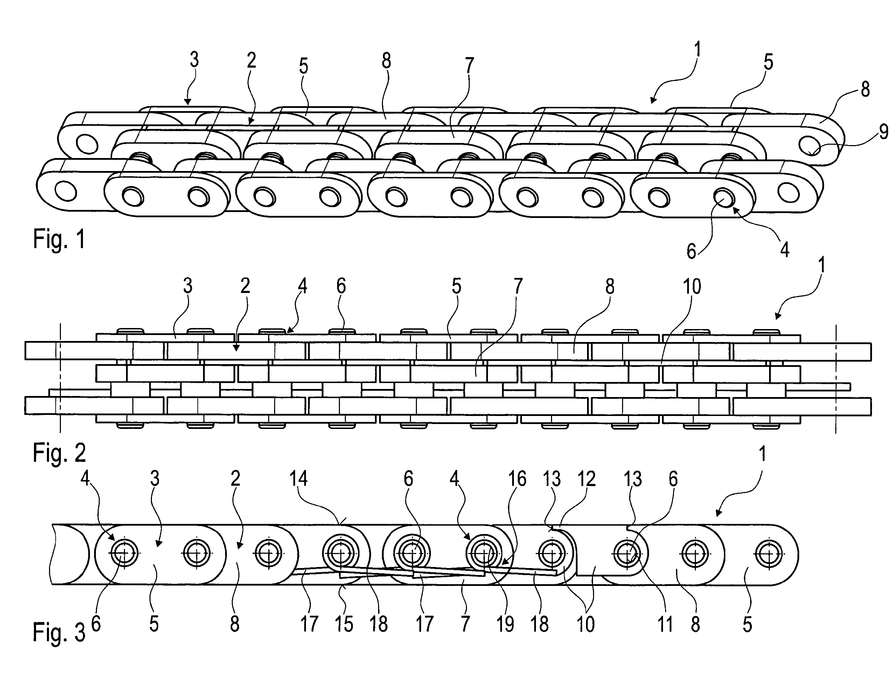

Die in Fig. 1 dargestellte beidseitig rückensteife Kette 1 umfasst sich abwechselnde Innenkettenglieder 2 und Außenkettenglieder 3, die jeweils über ein Kettengelenk 4 miteinander verbunden sind. Die Außenkettenglieder 3 umfassen zwei im parallelen Abstand zueinander angeordnete Außenlaschen 5 sowie eine im Wesentlichen mittig zwischen den Außenlaschen 5 angeordnete Mittellasche 7. Die Außenlaschen 5 und die Mittellasche 7 sind über ein senkrecht zu diesen angeordneten Gelenkbolzen 6 miteinander verbunden. Die Gelenkbolzen 6 erstrecken sich auch senkrecht zur Kettenlängsachse durch die Innenlaschen 8 der Innenkettenglieder 2. Die Innenlasche 8 weist jeweils zwei Gelenköffnungen 9 auf, durch die sich der Gelenkbolzen 6 hindurch erstreckt und passend aufgenommen ist, um ein Verschwenken der Innenkettenglieder 2 zu den Außenkettengliedern 3 zu ermöglichen. Der Gelenkbolzen 6 ist dabei in entsprechenden Gelenköffnungen (nicht gezeigt) der Außenkettenlasche 5 eingepresst. Die in der Fig. 1 sowie in den zugehörigen Detaildarstellungen in Fig. 2 bis Fig. 4 dargestellte erfindungsgemäße rückensteife Kette 1 ist als Flyerkettenaufbau ausgeführt ohne Hülsen oder Rollen zwischen den Innenlaschen 8.

Zwischen den Innenlaschen 8 der Innenkettenglieder 2 und den Mittellaschen 7 der Außenkettenglieder 3 sind Zwischenlaschen 10 angeordnet. Die Zwischenlaschen 10 weisen in der hier verwendeten Ausführungsform eine Gelenköffnung 11 auf, durch die sich der Gelenkbolzen 6 hindurch erstreckt, und weiter an der in der Draufsicht aus Fig. 2 gezeigten Oberseite 14 der rückensteifen Kette 1 an einer ersten Stirnseite der Zwischenlaschen 10 eine vorspringende Abstützkontur 12 sowie auf der zweiten Stirnseite der Zwischenlasche 10 eine zurückversetzte Stufe 13. Die vorspringende Abstützkontur 12 auf der ersten Stirnseite der Innenlasche 8 passt in die zurückversetzte Stufe 13 auf der zweiten Stirnseite der nächsten Innenlasche 8. Wie in der teilweise freigeschnittenen Seitenansicht der rückensteifen Kette 1 in der Fig. 3 gut zu erkennen, ermöglicht der Eingriff der vorstehenden Abstützkontur 12 einer Zwischenlasche 10 in die zurückversetzte Stufe 13 der nächsten Zwischenlasche 10 auf der Oberseite 14 die Versteifung der rückensteifen Kette 1 in die, einer der Umlenkrichtung um ein zugehöriges Kettenrad (nicht gezeigt) entgegengesetzte, zweite Gelenkrichtung. Die Zwischenlaschen 10 erstrecken sich ausgehend von der Gelenköffnung 11 in Richtung der Abstützkontur 12, so dass die Stufe 13 im Wesentlichen oberhalb der Gelenköffnung 11 an der Oberseite 14 ausgebildet ist. An der Unterseite 15 der rückensteifen Kette 1, die in einem Kettentrieb mit einem Kettenrad oder Umlenkrolle im Eingriff steht, endet die Zwischenlasche 10 im Abstand zur Unterseite 15, um bei der Herstellung der Zwischenlaschen 10 Material einzusparen und eine unbeabsichtigte Blockadewirkung in Richtung der ersten Gelenkrichtung beim Umlenken um das Kettenrad oder die Umlenkrolle zu vermeiden.

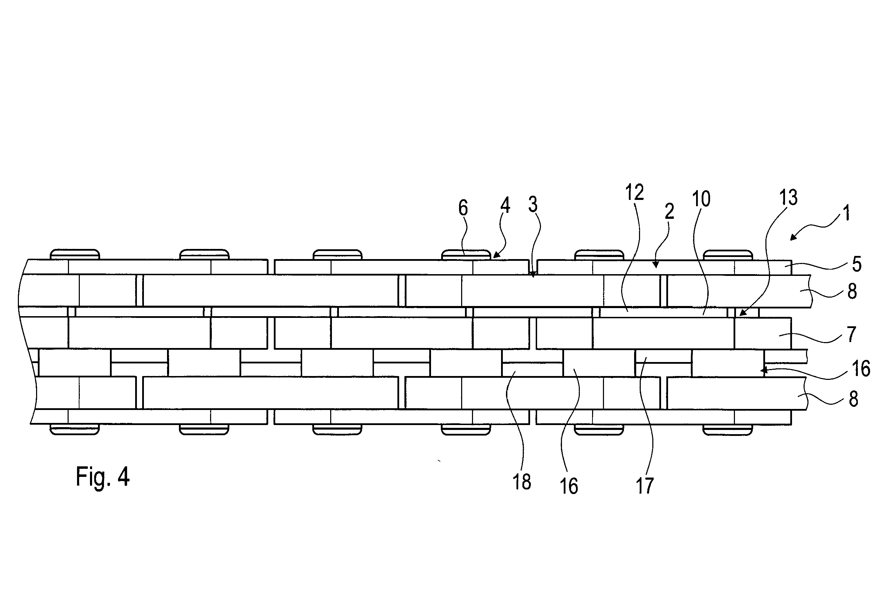

Auf der den Zwischenlaschen 10 abgewandten Seite der Mittellaschen 7 ist zwischen den Mittellaschen 7 und der zweiten Innenlasche 8 des Innenkettenglieds 2 jeweils ein Federelement 16 vorgesehen. Die Federelemente 16 weisen jeweils einen ersten Federarm 17 und einen zweiten Federarm 18 auf. Das Federelement 16 weist eine mittige Öffnung 19 auf durch die sich der Gelenkbolzen 6 des jeweiligen Kettengelenks 4 erstreckt. Der erste Federarm 17 und der zweite Federarm 18 erstrecken sich ausgehend von diesem Kettengelenk 4 zu jeweils unterschiedlichen Seiten (in Längsrichtung der Kette) zum jeweils nächsten Kettengelenk 4 und liegen von der Unterseite 15 an den Kettengelenken 4 bzw. den jeweiligen Federelementen 16 dieser Kettengelenke 4 unter der Vorspannung des Federelements 16 an. Wie in Fig. 4 gut zu erkennen, sind der erste Federarm 17 eines Federelements 16 und der zweite Federarm 18 des nächsten Federelements 16 quer zur Laufrichtung der Kette 1 zueinander versetzt angeordnet, so dass sie sich nicht überlappen und in ihrer Federwirkung gegenseitig behindern. Dabei liegt jeweils der erste Federarm 17 des Federelements 16 auf der den Mittellaschen 7 zugewandten Seite der Federelemente 16 und der zweite Federarm 18 der Federelemente 16 auf der den Innenlaschen 8 zugewandten Seite der Federelemente 16. Neben den in Fig. 4 gut zu erkennenden ringförmigen Federelemente 16 können die Federelemente 16 auch als Torsionsfeder ausgebildet sein, die in einem Stück aus einem Federdraht gebogen werden kann. Bei einer solchen Torsionsfeder bilden die Enden des Federdrahts gleichzeitig die beiden Federarme 17, 18 und die Wicklung des Federdrahts zur Ausbildung der Vorspannung auf die beiden Federarme 17, 18 bildet gleichzeitig die Öffnung 19 zur Aufnahme des Gelenkbolzens 6 aus.

Im Folgenden wird nunmehr, insbesondere anhand der Fig. 3 die Wirkungsweise der rückensteifen Kette 1 näher erläutert. Die in den Figuren 1 bis 3 dargestellte rückensteife Kette 1 zeigt die zur Kraftübertragung im Schubstrang notwendige beidseitige Versteifung der Kette 1. Dabei wird die Kette 1 an der Oberseite 14 zur Blockierung der Kette 1 in der zweiten Gelenkrichtung mittels der Zwischenlaschen 10 versteift. Dazu greift die an der ersten Stirnseite der Zwischenlaschen 10 vorstehende Abstützkontur 12 in die oberhalb der Gelenköffnung 11 der Zwischenlaschen 10 ausgebildete Stufe 13 der nächsten Zwischenlasche 1 ein, so dass eine weitere Biegung der rückensteifen Kette 1 in dieser zweiten Gelenkrichtung verhindert wird.

In der Umlenkrichtung um ein Kettenrad (nicht gezeigt) eines zugehörigen Kettentriebs, der ersten Gelenkrichtung, wird die Biegung der beidseitigen rückensteifen Kette 1 durch die Federelemente 16 lediglich gehemmt. Der erste Federarm 17 und der zweite Federarm 18 des Federelements 16 liegen von der Unterseite 15 der Kette 1 an den auf den Gelenkbolzen 6 der benachbarten Kettengelenke 4 angeordneten Federelemente 16 unter der Vorspannung des Federelements 16 an. Dabei stehen die beiden Federarme 17, 18 zwar jeweils in Kontakt mit dem benachbarten Kettengelenk 4, jedoch sind sie dort weder fixiert noch geführt. Die beiden Federarme 17, 18 des Federelements 16 drücken die Kette 1 mittels der Vorspannung des Federelements 16 entgegen der ersten Gelenkrichtung bis die Blockierung durch die Zwischenlaschen 10 eine weitere Bewegung in Richtung der zweiten Gelenkrichtung verhindert. Dadurch streckt sich die rückensteife Kette 1 in Längsrichtung der Kette 1 und ermöglicht so eine Kraftübertragung in Schubrichtung. Weiter verhindert die Vorspannung der Federelemente 16 gleichzeitig ein unbeabsichtigtes Einknicken der beidseitig rückensteifen Kette 1.

Bei einem Antrieb der Kette mittels eines Linearantriebs oder mittels eines Radialantriebs mit einem Antriebs-Kettenrad ermöglichen die Federelemente 16 bei einer Umlenkung der beidseitig rückensteifen Kette 1 um ein Kettenrad, Umlenkrolle oder Führung eine freigängige Umlenkung gegen die Federkraft der Federelemente 16, d.h. ohne eine Arretierung an der rückensteifen Kette 1 zu lösen oder ohne eine sonst notwendige Führung im Schubstrang. Der Widerstand gegen das Einknicken der rückensteifen Kette 1 bei der Umlenkung um ein Kettenrad, Umlenkrolle oder Führung kann durch die Vorspannung des Federelements 16 auf die beiden Federarme 17, 18 eingestellt werden. Die notwendige Kraft um die Kette 1 in der ersten Gelenkrichtung um das Kettenrad umzulenken wird durch das angetriebene Kettenrad selbst oder einen anderweitigen Linearbetrieb aufgebracht, so dass bei einem Auslaufen aus dem Kettenrad die Vorspannung der Federelemente 16 die rückensteifen Kette 1 selbsttätig in der ersten Gelenkrichtung versteift.

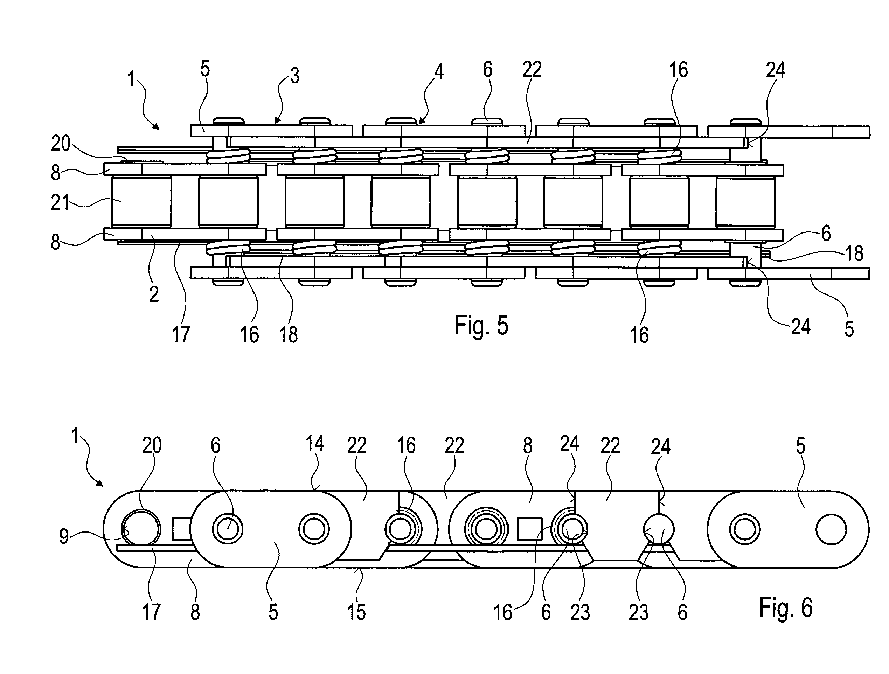

Eine weitere Ausführungsform einer erfindungsgemäßen rückensteifen Kette 1 zeigt Fig. 5, wobei diese rückensteifen Kette 1 als klassische Hülsen- oder Rollenkette ausgebildet ist. Auch bei diesem klassischen Aufbau wechseln sich Innenkettenglieder 2 und Außenkettenglieder 3 miteinander ab und sind jeweils über ein Kettengelenk 4 miteinander verbunden. Die Innenkettenglieder 2 umfassen jeweils im parallelen Abstand zueinander angeordnete Innenlaschen 8, wobei die zwei Innenlaschen 8 mittels Hülsen 20 miteinander verbunden sind. Durch die Hülsen 20 der Innenlaschen 8 erstreckt sich jeweils der Gelenkbolzen 6 des Kettengelenks 4, um die Innenkettenglieder 2 und die Außenkettenglieder 3 miteinander zu verbinden. Die Gelenkhülse 20 des Innenkettenglieds 2 wird zwischen den Innenlaschen 8 von einer Gelenkrolle 21 umgeben, um den Verschleiß des Kettengelenks 4 beim Eingriff in ein zugehöriges Kettenrad zu reduzieren. Zwischen den Außenlaschen 5 der Außenkettenglieder 3 und den Innenlaschen 8 der Innenkettenglieder 2 sind auf beiden Seiten der Kette 1 jeweils eine Zwischenlasche 22 und ein Federelement 16 vorgesehen, wobei die Zwischenlasche 22 jeweils an der Außenlasche 5 angrenzt und das Federelement 16 jeweils an der Innenlasche 8 angrenzt.

Die alternativ gestalteten Zwischenlaschen 22 dieser Ausführungsform einer erfindungsgemäßen rückensteifen Kette 1 sind jeweils zwischen zwei Gelenkbolzen 6 positioniert und weisen zur Fixierung der Zwischenlaschen 22 zwischen den Gelenkbolzen 6 zwei kreisabschnittsförmige Konturen 23 auf, die an den Gelenkbolzen 6 anliegen. Angrenzend an die kreisabschnittsförmigen Konturen 23 ist oberhalb der Gelenkbolzen 6 eine Abstützkontur 24 ausgebildet. Wie in der teilweise freigeschnittenen Seitenansicht der rückensteifen Kette 1 in Fig. 6 zu erkennen ist, ermöglicht das Anliegen der Abstützkontur 24 einer Zwischenlasche 22 gegen eine komplementäre Abstützkontur 24 einer angrenzenden Zwischenlasche 22, die Versteifung der rückensteifen Kette 1 in einer zweiten Gelenkrichtung, die einer Umlenkrichtung um ein zugehöriges Kettenrad (nicht gezeigt) entgegengesetzt ist. Dabei erstrecken sich die Abstützkonturen 24 der Zwischenlaschen 22 von dem Gelenkbolzen 6 bis zur Oberseite 14 der rückensteifen Kette 1. An der Unterseite 15 der rückensteifen Kette 1, die in einem Kettentrieb mit einem Kettenrad im Eingriff steht, endet die Zwischenlasche 22 in einem Abstand zur Unterseite 15 und weist zusätzlich ausgehend vom Gelenkbolzen 6 abgeschrägte Kanten auf, um eine unbeabsichtigte Blockadewirkung in Richtung der ersten Gelenkrichtung zu vermeiden.

Zwischen den Zwischenlaschen 22 und den Innenlaschen 8 des Innenkettenglieds 2 ist jeweils ein Federelement 16 vorgesehen. Die Federelemente 16 weisen auch hier einen ersten Federarm 17 und einen zweiten Federarm 18 auf, die sich von dem aufnehmenden Kettengelenk 4 zu unterschiedlichen Seiten zum jeweils nächsten Kettengelenk 4 erstrecken und von der Unterseite 15 an diesem Kettengelenk 4 bzw. den dort angebrachten Federelementen 16 unter Vorspannung anliegen. Wie in Fig. 5 gut zu erkennen, ist das Federelement 16 als Torsionsfeder ausgebildet, so dass der erste Federarm 17 und der zweite Federarm 18 in Laufrichtung der Kette 1 zueinander versetzt ausgebildet sind, und sich die Federarme 17, 18 benachbarter Federelemente 16 nicht überlappen.

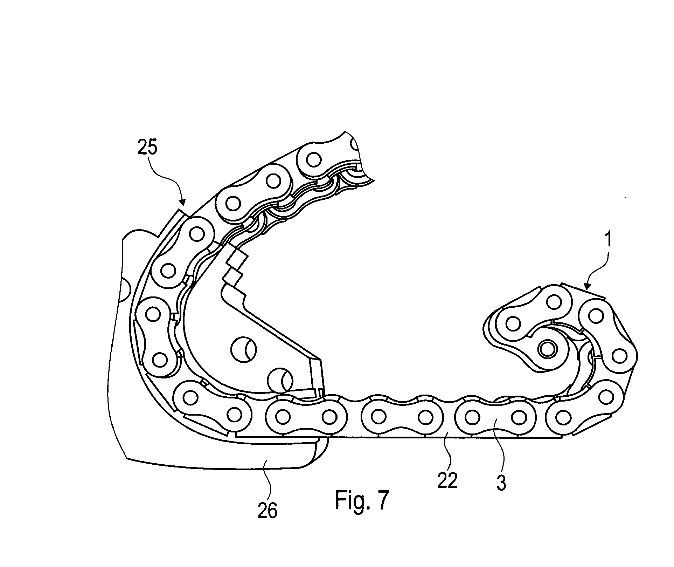

Fig. 7 zeigt eine perspektivische Draufsicht auf einen Kettentrieb 25 mit einer beidseitig rückensteifen Kette 1, entsprechend der in den Figuren 5 und 6 dargestellten Form einer klassischen Hülsen- oder Rollenkette, die an einem Ende über einen Linearantrieb bewegt wird. Die Kette 1 wird in diesen Kettentrieb 25 mittels einer Umlenkführung 26 in der ersten Gelenkrichtung gebogen und in Richtung der gewünschten Schubrichtung umgelenkt. Beim Auslaufen aus der Umlenkführung 26 bewirken die Federelemente 16 ein Strecken und Versteifen der Kette 1 in der ersten Gelenkrichtung.

## Patentansprüche

1. Rückensteife Kette (1) mit einer Vielzahl von einander abwechselnden Kettengliedern (2, 3), die jeweils über ein Kettengelenk (4) miteinander verbunden sind, wobei ein Federelement (16) mit mindestens einem ersten Federarm (17) vorgesehen ist, das Federelement (16) sich an einem Kettengelenk (4) abstützt, der erste Federarm (17) sich zu einem benachbarten Kettengelenk (4), mit dem es unter der Vorspannung des Federelements (16) beweglich in Kontakt steht, erstreckt, um eine Biegung der rückensteifen Kette (1) in einer ersten Gelenkrichtung zu hemmen, die Kettenglieder (2, 3) Kettenlaschen (5, 7, 8) aufweisen, und die Kettenlaschen (5, 7, 8) benachbarter Kettenglieder (2, 3) über das Kettengelenk (4) miteinander verbunden sind, **dadurch gekennzeichnet, dass** eine Versteifungseinrichtung vorgesehen ist, die die rückensteife Kette (1) in einer zweiten Gelenkrichtung versteift, und zum Ausbilden der Versteifungseinrichtung Kettenlaschen (5, 7, 8) benachbarter Kettenglieder ( 2, 3) Abstützabschnitte aufweisen, um die rückensteife Kette (1) in der zweiten Gelenkrichtung zu versteifen, oder Versteifungslaschen vorgesehen sind, die jeweils an mindestens einem Kettengelenk (4) angeordnet sind und stirnseitige Abstützkonturen (12, 13) aufweisen, um die rückensteife Kette (1) in der zweiten Gelenkrichtung zu versteifen.

2. Rückensteife Kette (1) nach Anspruch 1,
**dadurch gekennzeichnet, dass** das Federelement (16) einen zweiten Federarm (18) aufweist, der zweite Federarm (18) erstreckt sich zu einem zweiten benachbarten Kettengelenk (4) mit dem es unter der Vorspannung des Federelements (16) beweglich in Kontakt steht, um die Biegung der rückensteifen Kette (1) in der ersten Gelenkrichtung zu hemmen.

3. Rückensteife Kette (1) nach Anspruch 1 oder 2,
**dadurch gekennzeichnet, dass** das Kettengelenk (4) einen Gelenkbolzen (6) aufweist, wobei der Gelenkbolzen (6) sich durch das Federelement (16) erstreckt, um das Federelement (16) mit dem Kettengelenk (4) zu verbinden.

4. Rückensteife Kette (1) nach einem der Ansprüche 1 bis 3,
**dadurch gekennzeichnet, dass** das Federelement (16) als Torsionsfeder ausgebildet ist.

5. Rückensteife Kette (1) nach einem der Ansprüche 2 bis 4,
**dadurch gekennzeichnet, dass** der erste Federarm (17) und der zweite Federarm (18) des Federelements (16) frei an den beiden benachbarten Kettengelenken (4) anliegen und verschiebbar zu den beiden benachbarten Kettengelenken (4) angeordnet sind.

6. Rückensteife Kette (1) nach einem der Ansprüche 1 bis 5,
**dadurch gekennzeichnet, dass** die Kettenglieder (2, 3) abwechselnd mit Versteifungslaschen ausgestattet sind und die Versteifungslaschen jeweils an zwei benachbarten Kettengelenken (4) angeordnet sind.

7. Rückensteife Kette (1) nach einem der Ansprüche 1 bis 5,
**dadurch gekennzeichnet, dass** die Versteifungslaschen als Zwischenlaschen (10, 22) ausgebildet sind, die Zwischenlaschen (10, 22) sind jeweils an einem Kettengelenk (4) angeordnet, zwischen den Kettenlaschen (5, 7, 8) angrenzender Kettenglieder (2, 3) positioniert und weisen komplementäre stirnseitige Abstützkonturen (2, 3) auf.

8. Kettentrieb mit einer rückensteifen Kette (1) nach einem der Ansprüche 1 bis 7.

## Claims

1. An anti-backbend chain (1) comprising a plurality of alternate chain links (2, 3) each joined by a respective chain link (4),
wherein a spring element (16) comprising at least a first spring arm (17) is provided, the spring element (16) obstruct bending of the anti-backbend chain (1) in a first pivot direction, wherein the spring element (16) rests on a chain hinge (4), the first spring arm (17) extends to a neighboring chain hinge (4) and is movably in contact therewith under the biasing force of the spring element (16), the chain links (2,3) having chain link plates (5, 7, 8), wherein the chain link plates (5, 7, 8) of neighboring chain links (2, 3) are joined by respective chain hinges (4);
**characterized in that** a stiffening means is provided, which stiffens the anti-backbend chain (1) in a second pivot direction, wherein stiffening link plates are provided at chain link plates (5, 7, 8) of the neighboring chain links (2, 3) for defining the stiffening means, the respective stiffening link plates being arranged on at least one chain hinge (4) and comprising end face-side support contours (12, 13) so as to stiffen the anti-backbend chain (1) in the second pivot direction.

2. The anti-backbend chain (1) as claimed in claim 1,
**characterized in that** the spring element (16) comprises a second spring arm (18), the second spring arm (18) extends to a second neighboring chain hinge (4) and is movably in contact therewith under the biasing force of the spring element (16), so as to obstruct bending of the anti-backbend chain (1) in the first pivot direction.

3. The anti-backbend chain (1) as claimed in claim 1,
**characterized in that** the chain hinge (4) comprises a hinge pin (6), the hinge pin (6) extending through the spring element (16) so as to couple the spring element (16) to the chain hinge (4).

4. The anti-backbend chain (1) as claimed in one of claims 1 to 3,
**characterized in that** the spring element (16) is a torsion spring.

5. The anti-backbend chain (1) as claimed in one of claims 2 to 4,
**characterized in that** the first spring arm (17) and the second spring arm (18) of the spring element (16) abut freely on the two neighboring chain hinges (4) and are arranged such that they are displaceable relative to the two neighboring chain hinges (4).

6. The anti-backbend chain (1) as claimed in one of claims 1 to 5,
**characterized in that** the chain links (2, 3) are alternately provided with stiffening link plates and that the respective stiffening link plates are arranged on two neighboring chain hinges (4).

7. The anti-backbend chain (1) as claimed in one of claims 1 to 5,
**characterized in that** the stiffening link plates are configured as intermediate link plates (10, 22), that the intermediate link plates (10, 22) are arranged on a respective chain hinge (4), are positioned between the chain link plates (5, 7, 8) of adjoining chain links (2, 3) and have complementary end face-side support contours (2, 3).

8. A chain drive with an anti-backbend chain (1) as claimed in one of claims 1 to 7.

## Revendications

1. Chaine de poussée (1) à dos rigide, comprenant un grand nombre de maillons de chaine (2, 3) mutuellement alternés et reliés les uns aux autres respectivement par l'intermédiaire d'une articulation de chaine (4), chaine dans laquelle
il est prévu un élément de ressort (16) avec au moins un premier bras de ressort (17),
l'élément de ressort (16) s'appuie sur une articulation de chaine (4),
le premier bras de ressort (17) s'étend vers une articulation de chaine (4) voisine, avec laquelle il est en contact mobile sous précontrainte de l'élément de ressort (16), pour entraver une flexion dé la chaine de poussée (1) à dos rigide dans une première direction d'articulation,
les maillons de chaine (2, 3) présentent des plaques de chaine (5, 7, 8), et les plaques de chaine (5, 7, 8) de maillons de chaine (2, 3) voisins étant reliées mutuellement par l'intermédiaire de l'articulation de chaine (4),
**caractérisée en ce qu'**il est prévu un dispositif de rigidification, qui rigidifie la chaine de poussée (1) à dos rigide dans une deuxième direction d'articulation, et **en ce que** pour la réalisation du dispositif de rigidification, des plaques de chaine (5, 7, 8) de maillons de chaine (2, 3) voisins présentent des secteurs d'appui, en vue de rigidifier la chaine de poussée (1) à dos rigide dans la deuxième direction d'articulation, ou **en ce que** sont prévues des plaques de rigidification, qui sont agencées respectivement sur au moins une articulation de chaine (4) et présentent des contours d'appui (12, 13) frontaux, en vue de rigidifier la chaine de poussée (1) à dos rigide dans la deuxième direction d'articulation.

2. Chaine de poussée (1) à dos rigide selon la revendication 1,
**caractérisée en ce que** l'élément de ressort (16) présente un deuxième bras de ressort (18), et le deuxième bras de ressort (18) s'étend vers une deuxième articulation de chaine (4) voisine, avec laquelle il est en contact mobile sous précontrainte de l'élément de ressort (16), pour entraver la flexion de la chaine de poussée (1) à dos rigide dans la première direction d'articulation.

3. Chaine de poussée (1) à dos rigide selon la revendication 1 ou la revendication 2,
**caractérisée en ce que** l'articulation de chaine (4) comporte un tourillon d'articulation (6), le tourillon d'articulation (6) s'étendant à travers l'élément de ressort (16), en vue de relier l'élément de ressort (16) avec l'articulation de chaine (4).

4. Chaine de poussée (1) à dos rigide selon l'une des revendications 1 à 3,
**caractérisée en ce que** l'élément de ressort (16) est réalisé sous forme de ressort de torsion.

5. Chaine de poussée (1) à dos rigide selon l'une des revendications 2 à 4,
**caractérisée en ce que** le premier bras de ressort (17) et le deuxième bras de ressort (18) de l'élément de ressort (16) s'appuient librement sur les articulations de chaine (4) voisines, et sont agencés de manière coulissante par rapport aux deux articulations de chaine (4) voisines.

6. Chaine de poussée (1) à dos rigide selon l'une des revendications 1 à 5,
**caractérisée en ce que** les maillons de chaine (2,3) sont équipés alternativement de plaques de rigidification, et les plaques de rigidification sont agencées respectivement sur deux articulations de chaine (4) voisines.

7. Chaine de poussée (1) à dos rigide selon l'une des revendications 1 à 5,
**caractérisée en ce que** les plaques de rigidification sont réalisées sous forme de plaques intermédiaires (10, 22), et **en ce que** les plaques intermédiaires (10, 22) sont agencées respectivement sur une articulation de chaine (4), positionnées entre les plaques de chaine (5, 7, 8) de maillons de chaine (2, 3) adjacents, et présentent des contours d'appui frontaux (2, 3) complémentaires.

8. Entrainement à chaine comprenant une chaine de poussée (1) à dos rigide selon l'une des revendications 1 à 7.
